# EUROPEAN PATENT SPECIFICATION

(11) **EP 2 232 921 B1**
(45) Date of publication and mention of the grant of the patent: **25.07.2012**
(21) Application number: 08871514.9
(22) Date of filing: 19.12.2008
(51) Int. Cl.: H04W 36/14

(54) **HANDOVER CONTROL**
WEITERLEITUNGSSTEUERUNG
COMMANDE DE TRANSFERT

(30) Priority: 25.01.2008 WO PCT/GB2008/250313
(43) Date of publication of application: 29.09.2010
(73) Proprietor: BRITISH TELECOMMUNICATIONS public limited company, London EC1A 7AJ (GB)
(72) Inventor: EVANS, Gareth, David, Ipswich, Suffolk IP1 3TE (GB)
(74) Representative: Lidbetter, Timothy Guy Edwin
(86) International application number: PCT/GB2008/004237
(87) International publication number: WO 2009/092990

(56) References cited:
- EP-A- 1 244 318
- EP-A- 1 740 010
- WO-A-00/38456
- GB-A- 2 337 184
- US-A1- 2002 082 012

## Description

This invention relates to handover control for multi-mode wireless devices: that is to say, devices which are able to support two or more wireless interfaces. Some of these devices are able to hand over a data connection or voice call from one wireless interface to another without the session or call being dropped. Such arrangements are particularly useful for handsets capable of operating on both localised high bandwidth systems such as WLANs (Wireless local area networks) and public cellular networks which have greater geographical penetration but more limited facilities for example in bandwidth.

The decision as to when to hand over is typically taken by the device, by monitoring one or more parameters such as signal strength on both the current interface and the candidate for handover, so that if a predetermined threshold is reached indicating the availability of a better interface than the one currently in use, a handover from the current wireless interface to the other, better, one is initiated. It is known for handover to be initiated only if the difference in signal strength exceeds a predetermined value, to avoid too-frequent handovers when the signal strengths are similar. It is also known for the thresholds to be weighted, for example so that a cheaper or feature-rich service is favoured over another service.

Typically a single parameter is measured and a handover thresholds selected, though in some cases multiple parameters are monitored and an algorithm based upon the parameters and one or more thresholds used to determine whether to hand over or not.

It is known to modify criteria for handover between one base station and another in the same network in response to handover failures. In this situation handover is readily initiated because the handset and base station are continuously exchanging data relating to the availability of neighbouring base stations. However, if it is desired to switch between one network and another, only the handset has all the necessary information as the base stations are not in cooperation with each other - indeed it is more likely to be in each operators' commercial interests to seize control of the mobile unit from the other networks.

Network operators spend a lot of time, effort and money optimising the handover thresholds so that handsets maximise their coverage for the optimum network without the reliability of handovers dropping too much for any usage case. Setting a handover threshold so that a handover is attempted too late may result in the handover proving unsuccessful. However, the selection of the threshold for handover is more critical when switching between networks, because attempting a handover earlier than necessary may be disadvantageous, particularly if the second interface is more expensive to connect to, or lacks capabilities available on the first, or if the advantage it offers is temporary because of variations in signal quality on one or both networks.

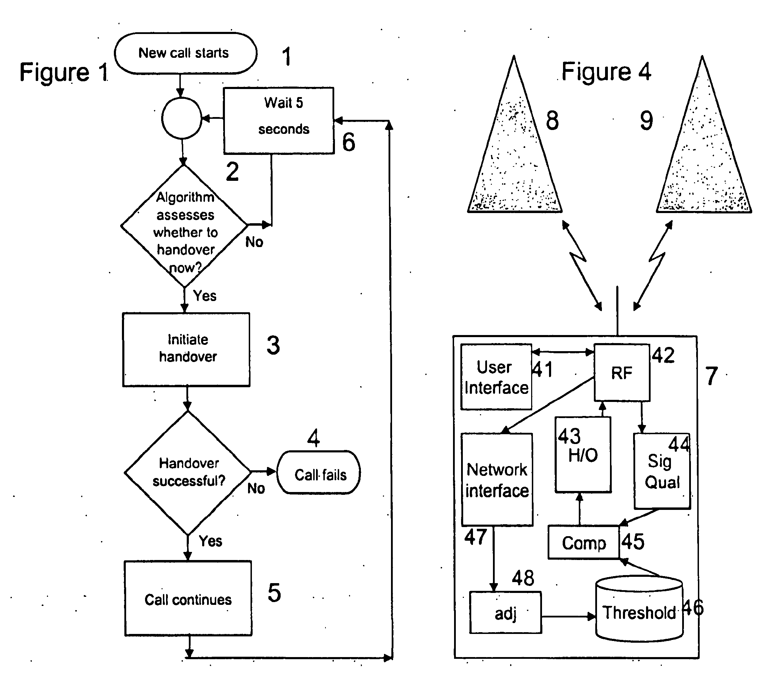

Current practice bases handover decisions on a fixed set of thresholds for parameters which are combined in an algorithm to decide whether to initiate handover or not, as shown in the flow-chart of Figure 1. In that figure, after a call is initiated (1) on a first network, an assessment (2) is made periodically to determine whether to hand over. If the decision is made to do so, the handover (3) takes place. If the handover is unsuccessful the call will fail (4), otherwise it continues (5) until the next periodic assessment (2). Note that the review period (6) may vary according to the network to which the handset is currently connected. United Kingdom Patent Application GB2337184 discloses a mobile unit which applies a default threshold condition, from which it may depart if conditions improve, but to which it reverts if contact is lost.

European Patent application EP 1740010 describes a handover system in which a number of attempts are made to hand over, but these attempts are suspended if the number of unsuccessful attempts exceeds a threshold value. US 2002/0082012 A1 discloses a method for dynamically changing a handover threshold value responsive to communication characteristics of mobile stations.

According to the invention, there is provided a wireless communications device having a handover processor for controlling the handover of connection of the device from a first communications network to a second communications network, having a signal quality assessment system for determining values for one or more measure of signal quality currently available from at least one of the communications networks, and determining whether the measure or measures of signal quality meet threshold values set for that network, a handover processor for initiating a handover attempt if the threshold values are met, comprising a threshold setting unit for iteratively increasing one or more of the threshold values when a handover attempt is not successful and iteratively decreasing one or more of the threshold values when a handover attempt is successful.

The invention also provides a process for controlling handover of a connection between two co-operating devices between a first communications network and a second communications network, in which values for one or more measure of signal quality are determined In at least one of the communications networks, the measure or measures of signal quality are compared with threshold values set for that network, a handover attempt is initiated if the threshold values are met, wherein one or more of the threshold values for the different networks are iteratively increased when a handover attempt is not successful and iteratively decreased when a handover attempt is successful.

Where one of the communications networks Is to be used in preference to the other, but the other is of ubiquitous availability, it is only necessary to measure the threshold values for the preferred system. To avoid too-frequent failure of the handover process, adjustment of the thresholds in the event of a successful handover may be more limited, in frequency or magnitude, than adjustments made in consequence of a handover failure.

This invention can be used for both handset-initiated handovers and for network-initiated handovers.

This invention differs from existing systems by introducing an iterative process to learn the optimum settings for handover thresholds from experience. The advantage of this is that it enables the handover thresholds to be optimised for the actual equipment in use and the way it is used, rather than making use of a conservative threshold for all devices and environments.

This invention would significantly reduce the existing costs expended by network operators or handset manufacturers in determining the optimum handover thresholds for installing in the network or handsets. Instead, the handset or network automatically optimises coverage in use, for many different usage cases.

An embodiment of the invention will be described by way of example with reference to the Figures, in which:
Figure 1 illustrates the prior art handover process already discussed
Figure 2 illustrates a modified handover process according to the invention.
Figure 3 illustrates a variant of the modified handover process according to the invention.
Figure 4 is a schematic diagram depicting the elements of a wireless handset device to which the invention may be applied.

The handset 7 comprises a user interface 41 for processing inputs such as audio or keyboard entries and generating outputs such as audio or text displays. These inputs and outputs are encoded/decoded and modulated/demodulated by a wireless (RF) interface 42 to allow communication with two different networks 8, 9. Handover between the networks is handled by a handover processor 43. This includes a signal quality measuring system 44, and a comparison processor 45 which compares the measured signal qualities with a stored threshold value 46. The output of the comparison processor 45 causes the handover processor 43 to initiate a handover attempt if the threshold values are met. A network interface unit 47 handles interactions with the network, such as location update, and also detects loss of contact with the network. The success or failure of a handover is reported by the network interface 47 to a threshold setting unit 48 which generates adjustments to the stored threshold values 46 according to the success or failure of individual handover attempts.

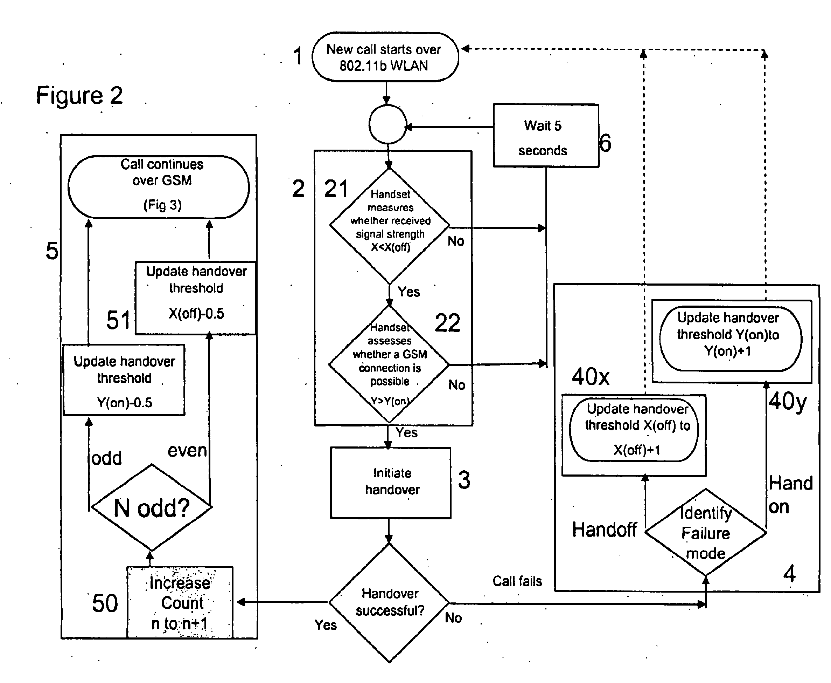

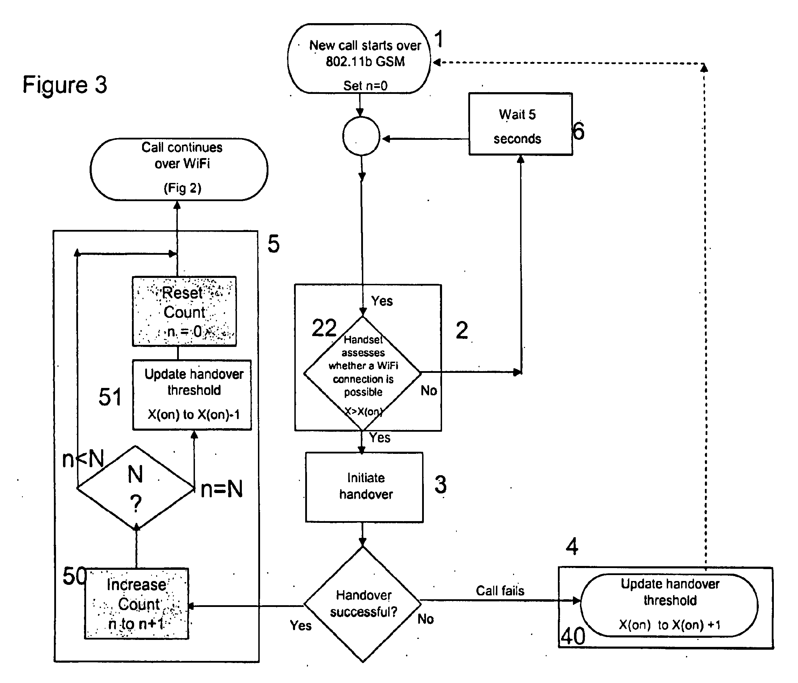

The flow-charts of Figures 2 and 3 illustrate an embodiment running on a handset (7, Figure 4) which supports calls over both 802.11b WLAN (WiFi) and GSM (cellular) wireless systems (8, 9). As already mentioned, the invention may also be run on the fixed infrastructure of a mobility network, to control network-initiated handovers. The flow-chart of Figure 2 shows the scenario for this invention whereby a call (1) is started over the WLAN (8) and then the WLAN signal strength is periodically monitored (21). Properties other than signal strength, such as signal quality, signal to noise ratio, bit-error-rate or packet error rate, or combinations of such properties, may also be used as thresholds. If it falls below a value X(off) the handset 40 determines whether a GSM connection 9 is available (22). This is done by determining whether the signal strength is greater than a value Y(on). If such a connection is available, the handover attempt is initiated (3).

The handover attempt (3) may fail (step 4), either because the quality of the connection 9 to which the handset is attempting handover is not adequate (branch 40x), or more usually because the quality of the existing connection 8 deteriorates further, to the point where connection is lost before the handover is completed (branch 40y). If this happens, the relevant threshold value X(off) and Y(on) is then raised (40) so that future handoffs are not attempted in those same conditions. Raising the threshold value Y(on) of the destination network 9 will prevent future handoffs being attempted to a network exhibiting such a low signal strength. Conversely, raising the threshold value X(off) of the originating network 8 will have the effect of causing any handover which is to be initiated to be started sooner, before the signal strength has deteriorated too far to complete the handover.

Other failure modes may require modification of both thresholds.

If the handover is successful, (step 5) then one or both of the handover thresholds (X(off), Y(on)) are lowered (step 51). This will cause future handovers to take place less promptly, allolwing unnecessary handovers to be avoided. Because the consequences of setting the thresholds too low (failure of call) are more severe than the consequences of setting them too high (reduced efficiency or extra cost), more caution is required in reducing the threshold, so the conditions for reduction of the threshold should be more stringent than for raising it. This may be achieved by having reductions in threshold operating in smaller increments than those used for increases, (as shown in Figure 2, increments are in steps of 1, but reductions in steps of 0.5). As shown in Figure 2, the thresholds may also be incremented alternately on successive successful handovers, rather than both being incremented together. Alternatively, it may be required that a number of successful handovers are to be completed (step 50, Figure 3) before the threshold is updated. This is in contrast to the behaviour in the event of a call failure (4), which will result in immediate modification of at least one of one of the thresholds X(off), Y(on) (step 40). The choice of which to modify preferably depends on the nature of the handover failure.

As shown by the dotted line in Figures 2 and 3, in the event of a handover failure, the user terminal may attempt to reconnect immediately. Such reconnection will of course use the higher thresholds and thus should succeed.

As shown in Figure 3, when a call is running over the GSM network 9, the process may work in the same way as that shown in Figure 2, but using different threshold criteria. In the example of Figure 3, when the GSM signal strength falls below a value Y(off) the call hands over to the WLAN 8, if the available WLAN signal strength (or whatever properly of combination of properties is used) is greater than a value X(on). However, in Figure 3 the WLAN connection 8 is preferred over the GSM network 9, so handover 3 to the WLAN may be attempted whenever the signal strength of that network exceeds a threshold X(on) (test 22) regardless of the GSM strength. Thus the signal quality of the current (GSM) connection is not an issue in determining whether a handover should take place and the step (21, Figure 2) of assessing quality of the current network is unnecessary. The threshold is modified as before (40, 51) according to the outcome of the handover attempt (3).

Initial values of thresholds X(on) Y(on) X(off) Y(off) for different networks will typically differ, to take account of preferences for using one network or the other for reasons of cost, available facilities, etc, and maximum and minimum values for these thresholds may be specified to prevent updates disrupting these preferences.

The invention may also be employed in a network-initiated handover process. The appropriate handover threshold for a given base station may be dictated by circumstances such as the presence of physical obstructions, range of the transmitter, differing RF interference environments, the speed at which users move in the locality, and other factors. Some of these factors may vary over time, for example if the base station is near a road designed for fast traffic but which is subject to frequent congestion, changes in topography such as tidies, or longer term factors such as trees in leaf or temporary structures which cause changes in wireless reception characteristics. In order to accommodate such variations, the invention may determine the threshold values at which handover is to be initiated for each base station (of the same or different network technologies).

## Claims

1. Wireless communications device (7) having a handover processor (43) for controlling the handover of connection of the device from a first communications network (8) to a second communications network (9), having a signal quality assessment system (44) for determining values for one or more measure of signal quality currently available from at least one of the communications networks, and determining whether the measure or measures of signal quality meet threshold values set for that network, a handover processor (43) for initiating a handover attempt if the threshold values are met, **characterised by** a threshold setting unit (45) for iteratively increasing one or more of the threshold values when a handover attempt is not successful and iteratively decreasing one or more of the threshold values when a handover attempt is successful.

2. Wireless communications device according to claim 1, wherein adjustments of the thresholds in the event of a successful handover are more limited, in frequency or magnitude, than adjustments made in consequence of a handover failure.

3. Wireless communications device according to claim 1 or 2, being a portable wireless handset

4. Wireless communications device according to claim 1, 2 or 3, being a fixed base station.

5. A process for controlling handover of a connection between two co-operating devices between a first communications network (8) and a second communications network (9), in which values for one or more measure of signal quality are determined (22) in at least, one of the communications networks, the measure or measures of signal quality are compared with threshold values set for that network, a handover attempt is initiated (3) if the threshold values are met, and **characterised in that** one or more of the threshold values for the different networks are iteratively increased (40x, 51) when a handover attempt is not successful and iteratively decreased when a handover attempt is successful (40y, 51).

6. A process according to claim 5, wherein adjustment of the thresholds in the event of a successful handover (51) are of smaller magnitude than adjustments (40) made in consequence of a handover failure.

7. A process according to claim 5 or 6, wherein thresholds are only adjusted in response to a successful handover when a predetermined number (50) of such handovers have been achieved.

8. A process according to claim 5, 6, or 7, wherein the handovers are initiated by a handset.

9. A process according to claim 5, 6, 7 or 8, wherein the handovers are initiated by a base station.

## Patentansprüche

1. Drahtloskommunikationsvorrichtung (7) mit einem Übergabeprozessor (43) zum Steuern der Übergabe einer Verbindung der Vorrichtung von einem ersten Kommunikationsnetz (8) zu einem zweiten Kommunikationsnetz (9), mit einem Signalqualitäts-Bewertungssystem (44) zum Bestimmen von Werten für ein oder mehrere Signalqualitätsmaße, die aktuell von zumindest einem der Kommunikationsnetze erhältlich sind, und zum Bestimmen, ob das Signalqualitätsmaß oder die Signalqualitätsmaße Schwellwerte erfüllen, die für jenes Netz eingestellt sind, einem Übergabeprozessor (43) zum Initiieren eines Übergabeversuchs, wenn die Schwellwerte erfüllt sind, **gekennzeichnet durch** eine Schwelleneinstelleinheit (45) zum iterativen Erhöhen von einem oder mehreren der Schwellwerte, wenn ein Übergabeversuch nicht erfolgreich ist, und zum iterativen Senken von einem oder mehreren der Schwellwerte, wenn ein Übergabeversuch erfolgreich ist.

2. Drahtloskommunikationsvorrichtung nach Anspruch 1, wobei Einstellungen der Schwellen im Fall einer erfolgreichen Übergabe in der Frequenz oder Größe begrenzter sind als Einstellungen, die als Folge eines Übergabefehlschlags vorgenommen werden.

3. Drahtloskommunikationsvorrichtung nach Anspruch 1 oder 2, die ein tragbares drahtloses Mobilteil ist.

4. Drahtloskommunikationsvorrichtung nach Anspruch 1, 2 oder 3, die eine feste Basisstation ist.

5. Verfahren zum Steuern der Übergabe einer Verbindung zwischen zwei zusammenarbeitenden Vorrichtungen zwischen einem ersten Kommunikationsnetz (8) und einem zweiten Kommunikationsnetz (9), in welchem Werte für ein oder mehrere Signalqualitätsmaße in zumindest einem der Kommunikationsnetze bestimmt werden (22), das Signalqualitätsmaß oder die Signalqualitätsmaße mit Schwellwerten verglichen werden, die für jenes Netz eingestellt sind, ein Übergabeversuch initiiert wird (3), wenn die Schwellwerte erfüllt sind, und **dadurch gekennzeichnet, dass** einer oder mehrere der Schwellwerte für die verschiedenen Netze iterativ erhöht werden (40x, 51), wenn ein Übergabeversuch nicht erfolgreich ist, und iterativ gesenkt werden, wenn ein Übergabeversuch erfolgreich ist (40y, 51).

6. Verfahren nach Anspruch 5, wobei Einstellungen der Schwellen im Fall einer erfolgreichen Übergabe (51) von kleinerer Größe als Einstellungen (40) sind, die als Folge eines Übergabefehlschlags vorgenommen werden.

7. Verfahren nach Anspruch 5 oder 6, wobei Schwellen nur als Antwort auf eine erfolgreiche Übergabe eingestellt werden, wenn eine vorgegebene Anzahl (50) solcher Übergaben erzielt worden sind.

8. Verfahren nach Anspruch 5, 6 oder 7, wobei die Übergaben durch ein Mobilteil initiiert werden.

9. Verfahren nach Anspruch 5, 6, 7 oder 8, wobei die Übergaben von einer Basisstation initiiert werden.

## Revendications

1. Dispositif de communication sans fil (7) comprenant un processeur de transfert (43), pour commander le transfert de connexion du dispositif, d'un premier réseau de communication (8) à un deuxième réseau de communication (9), comprenant un système d'évaluation de la qualité de signal (44), pour déterminer des valeurs pour une ou plusieurs mesures de qualité de signal actuellement disponibles à partir d'au moins l'un des réseaux de communication, et déterminer si la mesure, ou les mesures, de qualité de signal satisfait ou satisfont à des valeurs seuil fixées pour ce réseau, un processeur de transfert (43) pour initier une tentative de transfert, si les valeurs seuil sont satisfaites, **caractérisé par** une unité de fixation de seuil (45), pour augmenter de manière itérative une ou plusieurs des valeurs seuil, lorsqu'une tentative de transfert ne réussit pas, et diminuer de manière itérative une ou plusieurs des valeurs seuil, lorsqu'une tentative de transfert réussit.

2. Dispositif de communication sans fil selon la revendication 1, dans lequel des ajustements des seuils, dans l'éventualité où un transfert réussit, sont plus limités, en fréquence ou en ampleur, que des ajustements pratiqués consécutivement à un échec de transfert.

3. Dispositif de communication sans fil selon la revendication 1 ou 2, étant un combiné sans fil portable.

4. Dispositif de communication sans fil selon la revendication 1, 2 ou 3, étant une station de base fixe.

5. Procédé de commande du transfert d'une connexion entre deux dispositifs coopérant, entre un premier réseau de communication (8) et un deuxième réseau de communication (9), dans lequel des valeurs pour une ou plusieurs mesures de qualité de signal sont déterminées (22) en au moins l'un des réseaux de communication, la mesure ou les mesures de qualité de signal est ou sont comparées à des valeurs seuil fixées pour ce réseau, une tentative de transfert est initiée (3), si les valeurs seuil sont satisfaites, et **caractérisé en ce qu'**une ou plusieurs des valeurs seuil, pour les différents réseaux, sont augmentées de manière itérative (40x, 51), lorsqu'une tentative de transfert ne réussit pas, et diminuées de manière itérative, lorsqu'une tentative de transfert réussit (40y, 51).

6. Procédé selon la revendication 5, dans lequel l'ajustement des seuils, dans l'éventualité où un transfert réussit (51), est en ampleur plus petit que des ajustements (40) pratiqués consécutivement à un échec de transfert.

7. Procédé selon la revendication 5 ou 6, dans lequel des seuils sont seulement ajustés en réponse à un transfert réussi, lorsqu'un nombre (50) prédéterminé de tels transferts ont été accomplis.

8. Procédé selon la revendication 5, 6 ou 7, dans lequel les transferts sont initiés par un combiné.

9. Procédé selon la revendication 5, 6, 7 ou 8, dans lequel les transferts sont initiés par une station de base.
